# EUROPÄISCHE PATENTSCHRIFT

(11) **EP 2 181 366 B1**
(45) Veröffentlichungstag und Bekanntmachung des Hinweises auf die Patenterteilung: **22.04.2015**
(21) Anmeldenummer: 08784962.6
(22) Anmeldetag: 22.07.2008
(51) Int. Cl.: G05B 19/042

(54) **BEDIENGERÄT ZUM STEUERN VON AKTOREN, WIE BEISPIELSWEISE LEUCHTEN UND JALOUSIEN**
OPERATOR CONTROL DEVICE FOR CONTROLLING ACTUATORS, SUCH AS FOR EXAMPLE LIGHTS AND BLINDS
APPAREIL DE COMMANDE POUR COMMANDER DES APPAREILS, COMME PAR EXEMPLE DES LAMPES ET DES STORES

(30) Priorität: 22.08.2007 DE 102007039610
(43) Veröffentlichungstag der Anmeldung: 05.05.2010
(73) Patentinhaber: Zumtobel Lighting GmbH, 6851 Dornbirn (AT)
(72) Erfinder: MÜLLER, Ralf, 88239 Wangen i.A. (DE); ISLER, Konrad, 20121 Milano (IT); LEJOLY, Bertrand, 20121 Milano (IT)
(74) Vertreter: Thun, Clemens
(86) Internationale Anmeldenummer: PCT/EP2008/005999
(87) Internationale Veröffentlichungsnummer: WO 2009/024228

(56) Entgegenhaltungen:
- US-A1- 2001 003 464

## Beschreibung

Die vorliegende Erfindung betrifft ein Bediengerät zum Steuern von Aktoren, wie beispielsweise Leuchten und Jalousien.

Mit "Aktor" wird im Rahmen der vorliegenden Darstellung ein elektrisch ansteuerbares Gerät aus dem Bereich des Gebäude- oder Lichtmanagements bezeichnet. Insbesondere werden hierunter entsprechende Leuchten, Jalousien, Vorhänge, Fenster, Leinwände etc. verstanden. Ein entsprechendes Bediengerät kann daher insbesondere im Rahmen von Gebäude- bzw. Lichtmanagementsystemen verwendet werden.

In der Entwicklung der letzten Jahre sind die Ansteuermöglichkeiten für Aktoren vielfältiger geworden und dementsprechend sind auch die dazugehörigen Bediengeräte komplexer geworden. Dies hat dazu geführt, dass die Handhabung heute aktueller Bediengeräte teilweise vergleichsweise kompliziert ist; es gibt Bediengeräte, bei denen ein Benutzer im Allgemeinen verhältnismäßig viel Zeit aufwenden muss, um sich mit der Handhabung bzw. Bedienung des Geräts vertraut zu machen. Auch hat die Entwicklung dazu geführt, dass teilweise bereits das äußere Erscheinungsbild derartiger Bediengeräte bei einem Erstbenutzer das Gefühl auslösen kann, sich vor einem Gerät zu befinden, dessen Bedienung kompliziert ist.

Daher besteht heute ein Bedürfnis nach einem entsprechenden Bediengerät, das zwar einerseits mannigfaltige Funktionsmöglichkeiten hat, das aber andererseits dennoch eine Handhabung erlaubt, die vergleichsweise leicht, rasch und sicher erlernbar ist. Dabei soll das Bediengerät so gestaltet sein, dass es einem Erstbenutzer nicht allzu kompliziert erscheint.

Aus dem Stand der Technik ist ein Bediengerät in Form eines Infrarot-Wandsenders der Firma Siemens bekannt. Der Wandsender weist eine Funktionstaste auf, sowie eine Betriebsanzeige, die bei einer Betätigung der Funktionstaste aufleuchtet.

Aus der US 2001/0003464 A1 ist eine digitale Kamera mit einem Flüssigkristallbildschirm bekannt. Außerdem weist die Kamera eine Zoom-Taste zur Beeinflussung einer Zoomfunktion auf. Bei einer Betätigung der Zoom-Taste wird der Flüssigkristallbildschirm der Kamera eingeschaltet.

Der vorliegenden Erfindung liegt die Aufgabe zugrunde, ein entsprechendes Bediengerät mit erleichterter Handhabung anzugeben.

Diese Aufgabe wird gemäß der Erfindung mit einem in dem unabhängigen Anspruch angegebenen Bediengerät gelöst. Besondere Ausführungsformen der Erfindung sind in den abhängigen Ansprüchen angegeben.

Gemäß der Erfindung ist ein Bediengerät zum Steuern von mehreren elektrisch steuerbaren Aktoren, beispielsweise Leuchten und/oder Jalousien vorgesehen, das Mittel zum Senden von Steuersignalen zur Steuerung der Aktoren aufweist, sowie wenigstens ein Betätigungselement, wobei das Bediengerät dazu ausgelegt ist, bei einer Betätigung des Betätigungselements ein Steuersignal zu senden. Weiterhin weist das Bediengerät wenigstens eine Anzeigeeinheit auf, sowie Mittel zur Aktivierung und Deaktivierung der Anzeigeeinheit, wobei das Bediengerät dazu ausgelegt ist, die Anzeigeeinheit bei der Betätigung des Betätigungselements automatisch zu aktivieren, falls die Betätigung erfolgt, wenn die Anzeigeeinheit deaktiviert ist.

Dadurch, dass die Anzeigeeinheit erst dann aktiviert wird, wenn das Betätigungselement betätigt wird, ist es möglich, die Oberfläche des Bediengeräts, die zur Bedienung vorgesehen ist, im Folgenden als "Frontseite" des Bediengeräts bezeichnet, so zu gestalten, dass sie - bei deaktivierter Anzeigeeinheit, beispielsweise in einem "Stand-By-Modus" - ein vergleichsweise homogenes Erscheinungsbild aufweist. Dadurch kann erzielt werden, dass die Anzeigeeinheit im deaktivierten Zustand als solche nicht oder fast nicht erkennbar ist oder zumindest nicht auffällig erscheint. Auf diese Weise lässt sich das Bediengerät so gestalten, dass es den Eindruck erweckt, besonders einfach bedient werden zu können.

Das Bediengerät kann für ein Lichtmanagementsystem oder ein Gebäudemanagementsystem vorgesehen sein. Dabei kann weiterhin vorgesehen sein, dass die Steuersignale unter Zwischenschaltung einer zentralen Steuereinheit an die Aktoren gesendet werden können.

Vorteilhaft weist das Bediengerät weiterhin eine transparente oder halbtransparente Gehäuseabdeckung auf, die die wenigstens eine Anzeigeeinheit überdeckt. Durch eine derartige Abdeckung kann das Erscheinungsbild der Frontseite des Bediengeräts auf einfache Weise besonders homogen gestaltet werden. Dies ist besonders dann der Fall, wenn die Gehäuseabdeckung einstückig vorgesehen ist. In diesem Fall wird ein quasi "fugenloses" Bild ermöglicht. Besonders vorteilhaft ist vorgesehen, dass die Gehäuseabdeckung die Anzeigeeinheit vollständig überdeckt. Es kann dabei vorgesehen sein, dass die Gehäuseabdeckung die gesamte Frontseite des Bediengeräts bildet.

Vorteilhaft umfasst die wenigstens eine Anzeigeeinheit eine Flüssigkristallanzeige und/oder eine organische Leuchtdiode.

Vorteilhaft umfasst das Betätigungselement ein mechanisches Betätigungselement, beispielsweise einen Taster, einen Schalter oder einen Drehregler.

Vorteilhaft umfasst das Betätigungselement einen berührungssensiblen Sensor, beispielsweise einen kapazitiven berührungslosen Sensor.

Vorteilhaft umfasst das Betätigungselement Mittel zur Erzeugung eines haptisch erfassbaren und/oder akustischen und/oder optischen Bestätigungs-Signals nach erfolgter Betätigung. Hierdurch wird eine unmittelbare "Rückkopplung" der Tätigkeit, zum Beispiel in Form eines kurzen Tastendrückens für Ein- oder Ausschalten einer Beleuchtung, ermöglicht. Dies ist insbesondere deshalb vorteilhaft, weil bei heutigen Leuchtmitteln bzw. Beleuchtungssystemen eine gewisse Zeitspanne, beispielsweise ca. zwei Sekunden zwischen einer entsprechenden Einschalt-Betätigung und der endgültigen Erscheinung der vorgesehenen Beleuchtung vorgesehen sein kann.

Vorteilhaft umfasst das Bediengerät mehrere, beispielsweise zwischen drei und fünf, vorzugsweise vier Betätigungselemente in Form von Wahltastern, wobei das Bediengerät dazu ausgelegt ist, jeweils bei Betätigung eines der Wahltaster ein vorab festgelegtes Steuersignal an einen bestimmten Aktor oder an eine bestimmte Gruppe von Aktoren zu senden. Beispielsweise kann also vorgesehen sein, dass mit einem Wahltaster mehrere vorab festgelegte Leuchtmittel eingeschaltet und dabei auf bestimmte Helligkeitswerte gestellt werden. Bei den Wahltastern kann es sich also um "Funktionstasten" handeln, mit denen beispielsweise bestimmte "Lichtstimmungen" direkt aufgerufen werden können. Dabei kann alternativ oder zusätzlich beispielsweise vorgesehen sein, dass durch Betätigung eines der Wahltaster eine oder mehrere Jalousien in eine bestimmte Stellung gefahren werden kann.

Vorteilhaft weist das Bediengerät dabei weiterhin eine erste Anzeigeeinheit auf, die den Wahltastern zugeordnet ist und die dazu ausgelegt ist, das den Wahltastern jeweils zugeordnete, vorab festgelegte Steuersignal mit jeweils einem Symbol und/oder einem Text darzustellen. Es kann also vorgesehen sein, dass mit der ersten Anzeigeeinheit die Wahltaster gleichzeitig symbolisch gekennzeichnet werden können. Beispielsweise kann also vorgesehen sein, dass mit den Wahltastern jeweils bestimmte "Lichtstimmungen" aufgerufen bzw. eingeschaltet werden können und die Wahltaster mit jeweils einem Symbol der ersten Anzeigeeinheit gekennzeichnet werden können, die die entsprechende Lichtstimmung jeweils symbolisch darstellen.

Vorteilhaft weist das Bediengerät weiterhin eine zweite Anzeigeeinheit auf, die dazu ausgelegt ist, das jeweils durch eine Betätigung eines der Wahltaster aktuell gesendete Steuersignal anzuzeigen. Beispielsweise kann hierfür vorgesehen sein, dass eine aktuell durch einen der Wahltaster aktivierte Lichtstimmung mithilfe eines symbolhaften Wortes wie "Arbeit", "Konferenz", "Vortrag" usw. auf der zweiten Anzeigeeinheit dargestellt bzw. angezeigt wird.

Erfindungsgemäß weist das Bediengerät weiterhin ein Betätigungselement in Form eines Ein-Aus-Tasters und ein weiteres Betätigungselement in Form eines Drehreglers auf, der ringförmig um den Ein-Aus-Taster angeordnet ist. Der Drehregler kann einen kreisförmigen Rand aufweisen. Der Drehregler kann eine kreisförmige innere Begrenzung aufweisen und mit dieser unmittelbar an einen kreisförmigen äußeren Rand des Ein-Aus-Tasters angeordnet vorgesehen sein. Der Ein-Aus-Taster kann zentral auf einer Bedien- bzw. Frontseite des Bediengeräts angeordnet sein.

Der Ein-Aus-Taster und/oder der Drehregler können als kapazitiver berührungssensibler Sensor bzw. als kapazitive berührungssensible Sensoren ausgebildet sein.

Vorteilhaft umfasst dabei der Drehregler eine Rasterung zur Erzeugung eines haptisch erfassbaren Bestätigungs-Signals. Weiterhin vorteilhaft ist für den Drehregler kein Endanschlag vorgesehen. Weiterhin vorteilhaft ist der Drehregler punktsymmetrisch geformt und weist dabei eine Bedienoberfläche auf, die derart unstrukturiert ist, dass eine absolute Stellung des Drehreglers bei normaler Betrachtung nicht erkannt werden kann. (Mit "normaler Betrachtung" ist hierbei die Betrachtung mit dem bloßen Auge aus üblichem Abstand, beispielsweise aus einem halben Meter Entfernung bei Standardbeleuchtung gemeint.)

Vorteilhaft weist das Bediengerät dabei weiterhin eine Hinterleuchtungseinheit für den Ein-Aus-Taster und/oder den Drehregler auf, wobei die Hinterleuchtungseinheit vorzugsweise wenigstens eine Leuchtdiode umfasst. Weiterhin vorteilhaft ist dabei die Hinterleuchtungseinheit dimmbar gestaltet.

Vorteilhaft ist der Drehregler zur Einstellung von Betriebsparametern ausgelegt und die zweite Anzeigeeinheit weiterhin dazu ausgelegt, bei einer Betätigung des Drehreglers einen möglichen Regelbereich sowie den entsprechend aktuell eingestellten Wert eines einzustellenden Betriebsparameters anzuzeigen. Beispielsweise kann vorgesehen sein, dass mit dem Drehregler die Intensität einer dimmbaren Beleuchtung geregelt werden kann und/oder dass eine Jalousie oder eine Gruppe von Jalousien auf- oder abgefahren werden kann.

Vorteilhaft ist die wenigstens eine Anzeigeeinheit, also beispielsweise die erste und/oder die zweite Anzeigeeinheit dazu ausgelegt, eine Anzeige in Abhängigkeit von einer vorgesehenen Ausrichtung des Bediengeräts darzustellen. Insbesondere kann beispielsweise vorgesehen sein, dass das Bediengerät entweder in einer horizontalen oder in einer vertikalen Ausrichtung montiert wird und dabei die Anzeigeeinheit dazu ausgelegt ist, Symbole oder Schriften oder dergleichen dementsprechend in zwei unterschiedlichen Ausrichtungen, also entsprechend um 90° zueinander gedreht, darzustellen.

Vorteilhaft weist das Bediengerät eine Steckverbindungsvorrichtung, beispielsweise eine USB-Steckbuchse, zur Verbindung mit einem Gerät zur Konfiguration und/oder Parametrierung des Bediengeräts auf. Die Steckverbindung kann dabei vorteilhaft an einer Stelle des Bediengeräts vorgesehen sein, die nicht auf der Frontseite liegt.

Vorteilhaft ist das Bediengerät für eine Menü-Führung ausgelegt. Dazu kann vorgesehen sein, dass durch "langes", beispielsweise länger als zwei oder drei Sekunden dauerndes Drücken eines Betätigungselements, beispielsweise des Ein-Aus-Tasters das Menü aktiviert werden kann. Gegebenenfalls kann der Drehregler in diesem Fall zur Menüwahl vorgesehen sein und der Ein-Aus-Taster zur Eingabe-Bestätigungsfunktion.

Vorteilhaft ist das Bediengerät dazu ausgelegt, in einem Stand-By-Modus ein Orientierungslicht abzugeben, beispielsweise über das erste Betätigungselement. Beispielsweise kann hierfür gegebenenfalls die vorzugsweise dimmbare Hinterleuchtung des Ein-Aus-Tasters vorgesehen sein.

Die Erfindung wird im Folgenden anhand eines Ausführungsbeispiels und mit Bezug auf die Zeichnungen näher erläutert. Es zeigen:
- Fig. 1: eine Frontansicht eines ersten Ausführungsbeispiels eines erfindungsgemäßen Bediengeräts,
- Fig. 2a: eine perspektivische Darstellung des Bediengeräts nach Fig. 1 bei deaktivierter Anzeigeeinheit,
- Fig. 2b: eine perspektivische Darstellung des Bediengeräts nach Fig. 1 bei aktivierter Anzeigeeinheit,
- Fig. 3: eine Explosionsdarstellung des Bediengeräts,
- Figuren 4a und 4b: zwei mögliche Ausrichtungen des Bediengeräts, mit Anordnung der Wahltaster in einem unteren oder in einem rechten Bereich,
- Fig. 5: eine Veranschaulichung einer Bedien-Abfolge zum Lichtdimmen;
- Fig. 6: eine Veranschaulichung einer Bedien-Abfolge zum Jalousie-Fahren,
- Fig. 7: eine Darstellung zur Menü-Führung, und
- Fig. 8: eine Frontansicht eines zweiten Ausführungsbeispiels eines erfindungsgemäßen Bediengeräts.

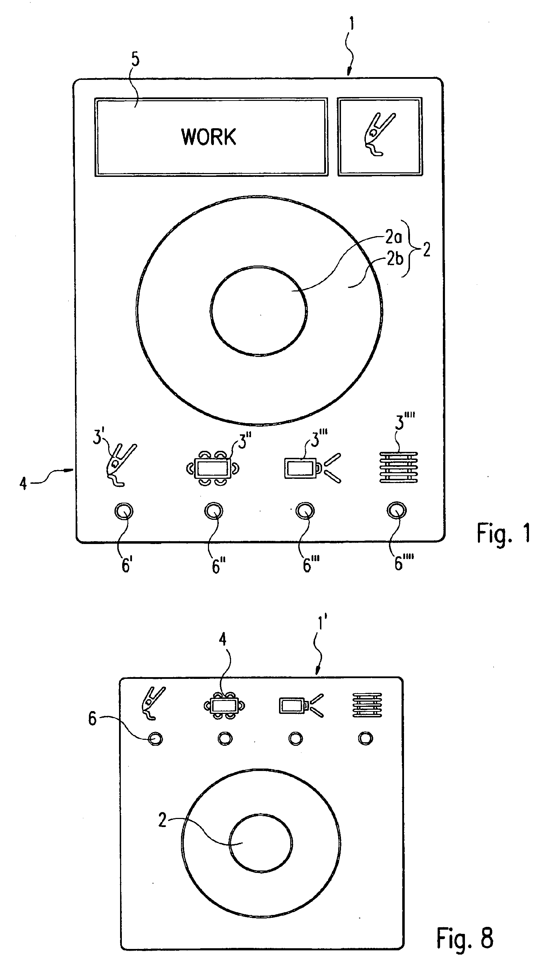

Fig. 1 zeigt eine Frontansicht eines ersten Ausführungsbeispiels eines erfindungsgemäßen Bediengeräts 1 zum Steuern von mehreren elektrisch steuerbaren Aktoren, beispielsweise Leuchten und Jalousien. Weitere Beispiele für derartige mögliche Aktoren sind Klimageräte, Heizungen, Vorhänge, Fenster und Leinwände.

Das Bediengerät 1 weist Mittel zum Senden von Steuersignalen zur Steuerung der Aktoren auf. Dies entspricht an sich dem Stand der Technik; daher ist hierauf an dieser Stelle nicht näher eingegangen. Beispielsweise kann also vorgesehen sein, dass mit dem Bediengerät ein Leuchtmittel oder eine bestimmte Gruppe von Leuchtmitteln eingeschaltet werden kann, so dass bestimmte, vorab festgelegte "Lichtstimmungen" aktiviert werden können. Auch kann vorgesehen sein, dass mit dem Bediengerät eine Jalousie oder eine Gruppe von Jalousien verstellt werden kann oder dergleichen. Das Bediengerät kann dabei zur Beleuchtungs- bzw. Aktorensteuerung von einem oder von mehreren Räumen vorgesehen sein. Allgemein kann also das Bediengerät im Rahmen eines Lichtmanagementsystems oder eines Gebäudemanagementsystems verwendet werden.

Weiterhin weist das Bediengerät 1 ein erstes Betätigungselement 2 auf, das dazu ausgelegt ist, bei einer Betätigung ein Steuersignal an zumindest einen der Aktore zu senden. Beim ersten Ausführungsbeispiel ist das erste Betätigungselement 2 zentral auf der Front- bzw. Bedienseite des Bediengeräts 1 angeordnet.

Außerdem weist das Bediengerät 1 bei diesem Ausführungsbeispiel eine erste Anzeigeeinheit 4 auf, die in der Darstellung der Fig. 1 an vier mit der Anzeigeeinheit 4 angezeigten Symbolen 3', 3", 3"', 3"" erkennbar ist. Alternativ oder ergänzend zu einer Darstellung in Form eines Symbols ist dabei eine Darstellung in Form eines Textes möglich. Weiterhin weist das Bediengerät 1 Mittel zur Aktivierung und Deaktivierung der Anzeigeeinheit 4 auf. Die Darstellung der Fig. 1 zeigt das Bediengerät 1 in einem Zustand der aktivierten Anzeigeeinheit 4; in diesem Zustand sind also im gezeigten Beispiel die vier Symbole 3', 3", 3 ", 3 "" erkennbar angezeigt. Das Bediengerät 1 ist dabei dazu ausgelegt, die erste Anzeigeeinheit 4 bei der Betätigung des Betätigungselements 2 zu aktivieren, falls die Betätigung zu einem Zeitpunkt erfolgt, zu dem die erste Anzeigeeinheit 4 deaktiviert ist. Vorzugsweise wird dabei die erste Anzeigeeinheit 4 unmittelbar aktiviert, sobald die Betätigung des Betätigungselements 2 erfolgt. Eine deaktivierte Anzeigeeinheit 4 kann beispielsweise in einem Stand-By-Modus des Bediengeräts 1 vorgesehen sein.

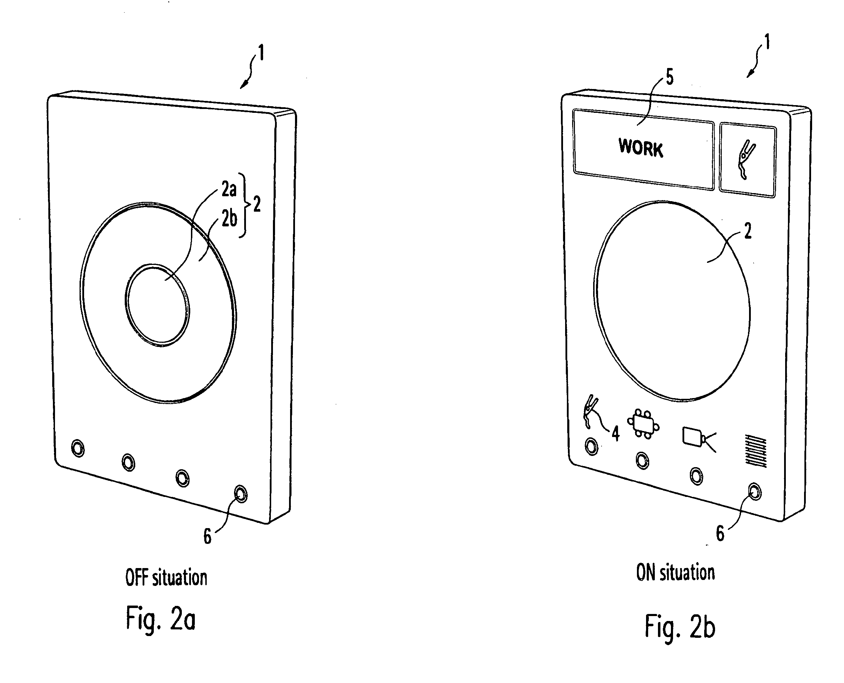

In Fig. 2a ist das Bediengerät 1 gemäß diesem Ausführungsbeispiel in einem Zustand dargestellt, in dem die erste Anzeigeeinheit 4 deaktiviert ist. Die Symbole 3', 3", 3"', 3"" sind in diesem Zustand nicht zu erkennen. Zum Vergleich ist in Fig. 2b das Bediengerät 1 in einem Zustand dargestellt, in dem die erste Anzeigeeinheit 4 aktiviert ist. Man erkennt, dass bei deaktivierter Anzeigeeinheit 4 nicht nur keine Symbole, sondern praktisch überhaupt keinerlei Anzeige bzw. Darstellung im Bereich der ersten Anzeigeeinheit 4 erkennbar ist. Eine erkennbare Anzeige erfolgt ausschließlich bei aktivierter Anzeigeeinheit 4.

Mit Bezug auf die Darstellung der Fig. 1 ist die erste Anzeigeeinheit 4 an der Frontseite, also an der zur Bedienung vorgesehenen Seite des Bediengeräts 1, unterhalb des Betätigungselements 2 angeordnet.

Die erste Anzeigeeinheit 4 kann dabei eine Flüssigkristallanzeige, also ein LC-Display umfassen oder eine organische Leuchtdiode (OLED). Für die Genauigkeit der Anzeige kann dabei beispielsweise 5 Pixel pro Millimeter vorgesehen sein. Außerdem kann vorgesehen sein, dass die Helligkeit der Anzeige einstellbar ist. Auch kann vorgesehen sein, dass nutzerspezifische Symbole bzw. Erkennungszeichen etc., die in einem Standardgrafikformat (JPG, BMP, TIFF, PNG,...) vorliegen, mithilfe einer entsprechenden Software importiert und von der Anzeigeeinheit 4 dargestellt werden können.

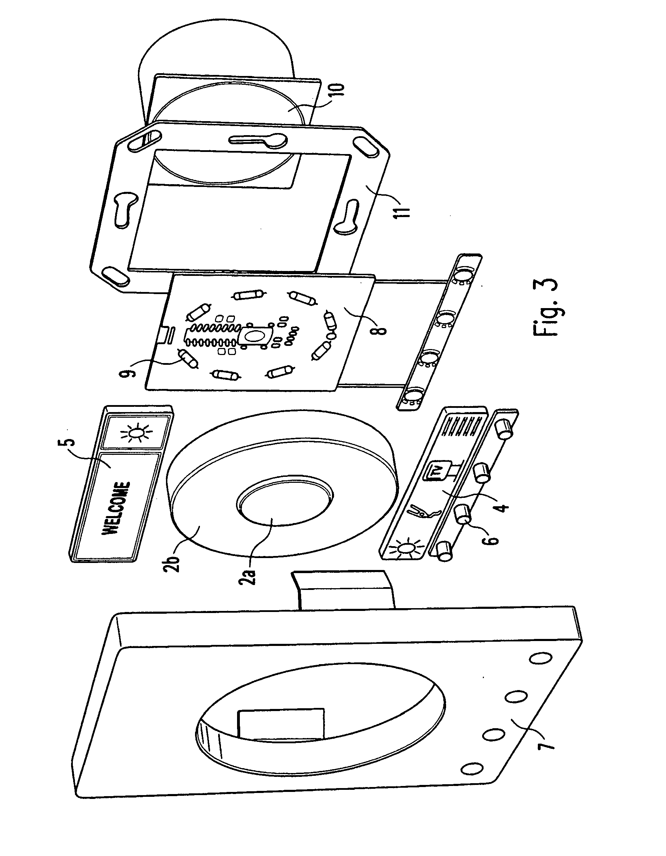

In der Explosionsdarstellung der Fig. 3 ist der Aufbau des Bediengeräts 1 gemäß dem ersten Ausführungsbeispiel schematisch dargestellt. Man erkennt als oberste, frontseitige Schicht eine Gehäuseabdeckung oder kurz Abdeckung 7, die bei diesem Ausführungsbeispiel transparent oder semitransparent gestaltet ist. Die Abdeckung 7 ist dabei so gestaltet, dass sie im zusammengebauten Zustand des Bediengeräts 1 die erste Anzeigeeinheit 4, hier beispielhaft als LC-Display dargestellt, vollständig überdeckt. Auf diese Weise wird leicht ermöglicht, dass bei deaktivierter Anzeigeeinheit 4 auf der Frontseite des Bediengeräts 1 im Bereich der ersten Anzeigeeinheit 4 praktisch keinerlei Anzeige oder Darstellung erkennbar ist. Auch lässt sich mit einer derartigen Abdeckung 7 vermeiden, dass in diesem Bereich bei deaktivierter Anzeigeeinheit 4 ein entsprechender Rahmen oder dergleichen sichtbar ist, der bei einer Bedienperson den Eindruck erwecken könnte, dass an dieser Stelle eine Anzeige vorgesehen ist. Insgesamt wird somit ein sehr "homogenes" und "fugenloses" Erscheinungsbild der frontseitigen Bedienoberfläche des Bediengeräts 1 ermöglicht. Dies trägt dazu bei, die Hemmschwelle zur Bedienung herabzusetzen, die möglicherweise bei einer Bedienperson bei Anblick des Bediengeräts 1 entsteht.

Die Abdeckung 7 kann beispielsweise aus Kunststoff gefertigt sein.

Wie aus der Darstellung der Fig. 3 andeutungsweise hervorgeht, kann das Bediengerät 1 als Unterputz-Bediengerät ausgestaltet sein. Dabei kann das Bediengerät 1 in einem rückwärtigen Teil eine elektronische Einheit 10 umfassen, sowie einen Montagerahmen 11. Die Abdeckung 7 kann dabei so gestaltet sein, dass sie den Montagerahmen 11 vollständig ab- bzw. überdeckt, was weiterhin dazu beiträgt, dass das Erscheinungsbild der Frontseite des Bediengeräts 1 besonders homogen gestaltet werden kann. Es kann auch eine flächenbündige Montage vorgesehen sein, bei der im eingebauten Zustand die Frontseite der Abdeckung 7 in einer Ebene mit einer umgebenden Wand vorgesehen ist. Ferner ist auch eine Aufputzmontage unter Verwendung eines entsprechenden zusätzlichen Aufputz-Gehäuses für das Bediengerät möglich.

Im Bereich des ersten Betätigungselements 2 weist die Abdeckung 7 eine entsprechende Aussparung bzw. Öffnung auf, in die im zusammengebauten Zustand das Betätigungselement 2 eingreift.

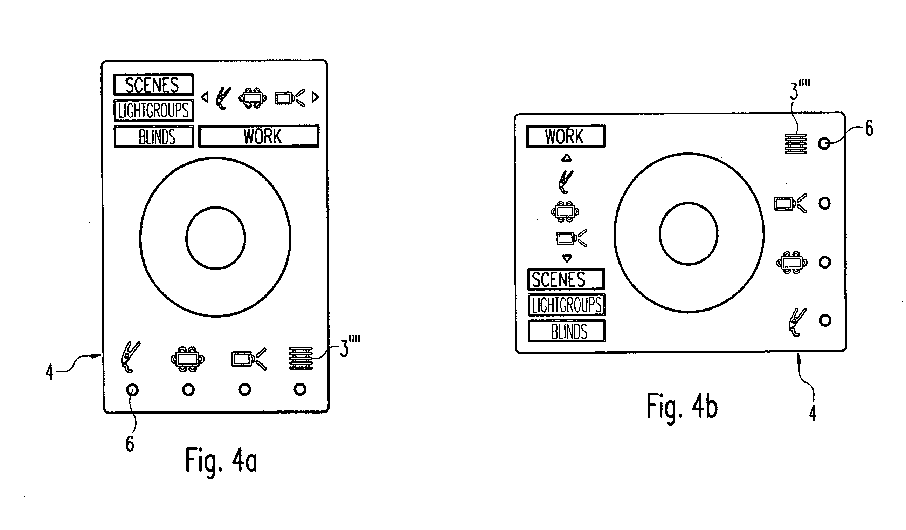

Die erste Anzeigeeinheit 4 ist bei diesem Ausführungsbeispiel weiterhin dazu ausgelegt, die Symbole 3', 3", 3"', 3"" in unterschiedlichen Ausrichtungen darzustellen. Dies ist vorteilhaft, weil auf diese Weise das Bediengerät 1 in unterschiedlichen Ausrichtungen, also beispielsweise horizontal und vertikal, montiert werden kann und dabei für jede vorgesehene Ausrichtung eine Anzeige der Symbole 3', 3", 3"', 3"" in der entsprechend richtigen Ausrichtung vorgesehen werden kann. In den Figuren 4a und 4b ist hierfür ein Beispiel gezeigt. Die Fig. 4a zeigt den oben genannten Fall, in dem die erste Anzeigeeinheit 4 unterhalb des Betätigungselements 2 angeordnet ist. Das Bediengerät 1, das gemäß dem ersten Ausführungsbeispiel eine rechteckige Frontseite aufweist, ist hier also vertikal ausgerichtet. Fig. 2b zeigt den Fall, in dem das Bediengerät um 90° gedreht, also horizontal angeordnet ist, und zwar so, dass die erste Anzeigeeinheit 4 rechts neben dem Betätigungselement 2 liegt. Die Symbole 3', 3", 3"', 3"" sind dementsprechend ebenfalls gedreht, so dass sie in der vorgesehenen Ausrichtung erscheinen. In den Figuren 4a und 4b ist hierzu beispielhaft das vierte Symbol 3"" bezeichnet. Eine derartige Darstellungsmöglichkeit in Abhängigkeit einer vorgesehenen Ausrichtung des Bediengeräts 1 ist insbesondere mit Blick auf unterschiedliche Normen in unterschiedlichen Ländern von Vorteil.

Weiterhin weist das Bediengerät 1 gemäß dem ersten Ausführungsbeispiel weitere Betätigungselemente, und zwar mehrere, vorzugsweise vier Wahltaster 6 auf. In den Figuren 2 bis 4 ist jeweils beispielhaft einer der vier Wahltaster 6 mit einem Bezugszeichen bezeichnet. Vorzugsweise sind die Wahltaster 6 als schmale Drucktasten, beispielsweise mit einem Durchmesser von etwa 4 mm, ausgebildet. Dies lässt insbesondere im Vergleich zu größeren Wahltastern mehr Raum für die erste Anzeigeeinheit 4.

Für die Wahltaster 6 ist jeweils ein deutlicher Druckpunkt vorgesehen, der bei vorgesehener Betätigung des Wahltasters 6 als haptisch erfassbares Bestätigungs-Signal erkannt werden kann.

Wie aus Fig. 1 hervorgeht, sind die vier Wahltaster 6', 6", 6"', 6"" unterhalb der Symbole 3', 3", 3"', 3"" angeordnet, so dass bei normaler Betätigung der Wahltaster 6 die Symbole nicht von einem Finger der Bedienperson verdeckt werden.

Das Bediengerät 1 ist dazu ausgelegt, jeweils bei Betätigung eines der Wahltaster 6 ein vorab festgelegtes Steuersignal an eine bestimmte, vorab festgelegte Gruppe von Aktoren oder an einen bestimmten Aktor zu senden. Beispielsweise können bei diesem Ausführungsbeispiel also bis zu vier unterschiedliche Beleuchtungsarten, also "Lichtstimmungen" vorab konfiguriert sein, wobei jede Beleuchtungsart einem Wahltaster 6 zugeordnet ist, so dass mit der Betätigung eines Wahltasters 6 die entsprechende Beleuchtungsart bzw. Lichtstimmung eingeschaltet werden kann.

Beim Ausführungsbeispiel sind die erste Anzeigeeinheit 4 und die Wahltaster 6 aufeinander abgestimmt, so dass die vier Symbole 3', 3", 3"', 3"", die mit der ersten Anzeigeeinheit 4 angezeigt werden können, jeweils an einem der vier Wahltaster 6', 6", 6"', 6"" angezeigt werden können, so dass die Symbole 3', 3", 3"', 3"" also dazu dienen können, die Funktionen der Wahltaster 6 zu kennzeichnen. Die Symbole können also beispielsweise für entsprechende Beleuchtungsarten bzw. Lichtstimmungen stehen. Wie in Fig. 1 skizziert, ist dabei dem ersten Wahltaster 6' das erste Symbol 3' zugeordnet, dem zweiten Wahltaster 6" das zweite Symbol 3" , dem dritten Wahltaster 6"' das dritte Symbol 3"' und dem vierten Wahltaster 6"" das vierte Symbol 3"". Die erste Anzeigeeinheit 4 dient also zur Kennzeichnung der Wahltaster 6.

Wie beispielsweise in den Figuren 1 und 2 skizziert, umfasst das erste Betätigungselement 2 bei diesem Ausführungsbeispiel einen kreisförmigen Ein-Aus-Taster 2a, mit dem eine Beleuchtung ein- und ausgeschaltet werden kann und einen Drehregler 2b in Form eines ebenfalls kreisförmigen Drehrads, der sich am Außenrand des Ein-Aus-Tasters 2a direkt anschließt und der ringförmig und symmetrisch um den Ein-Aus-Taster 2a angeordnet ist. Das erste Betätigungselement 2 setzt sich also in diesem Fall aus zwei Betätigungselementen 2a, 2b zusammen. Der Ein-Aus-Taster 2a und/oder der Drehregler 2b können dabei als kapazitive berührungssensible Sensoren ausgebildet sein.

Es kann vorgesehen sein, dass bei eingeschalteter Beleuchtung durch Betätigung des Ein-Aus-Tasters 2a die Beleuchtung ausgeschaltet wird und außerdem die Anzeigeeinheit 4 deaktiviert wird.

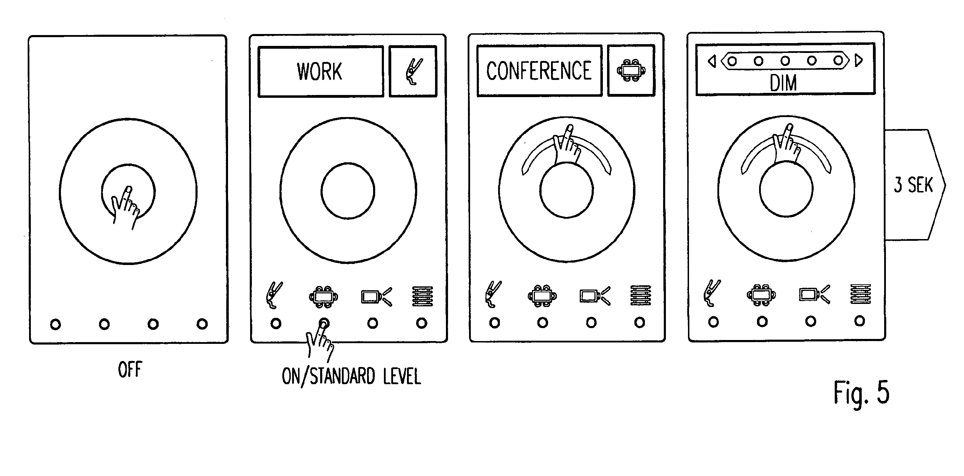

Beim Ausführungsbeispiel bildet das erste Betätigungselement 2 ein zentrales und aufgrund der Größenverhältnisse dominierendes Element auf der Front- bzw. Bedienseite des Bediengeräts 1. Anschaulich geht die vorgesehene Bedienweise des Ein-Aus-Tasters 2a und des Drehreglers 2b auch aus Fig. 5 hervor.

Der Drehregler 2b ist so gestaltet, dass er auf der Frontseite keinerlei Struktur aufweist, also insbesondere keine Prägung oder dergleichen, so dass die absolute Lage des Drehreglers 2b bei bloßem Anblick des Bediengeräts 1 nicht erkennbar ist. Dies trägt weiterhin dazu bei, das Erscheinungsbild des Bediengeräts 1 einfach zu gestalten und damit mögliche Hemmschwellen bei der Bedienung niedrig zu halten.

Der Drehregler 2b weist bei diesem Ausführungsbeispiel eine Rasterung auf, die bei einer Betätigung des Drehreglers 2b haptisch erfassbar ist. Auf diese Weise lässt sich ein haptisch erfassbares Bestätigungs-Signal erzeugen, das einer Bedienperson intuitiv den Eindruck vermitteln kann, die Betätigung wie vorgesehen durchgeführt zu haben.

Für den Drehregler 2b ist kein Endanschlag vorgesehen. Der Drehregler 2b kann also endlos in eine Richtung gedreht werden.

Für den zentralen Ein-Aus-Taster 2a ist ebenfalls ein Mittel zur Erzeugung eines Bestätigungs-Signals vorgesehen. Dabei kann ein haptisch erfassbares Signal vorgesehen sein und/oder ein akustisch erfassbares Signal, beispielsweise ein dezentes Knacken oder ein "Beep" oder ähnliches und/oder ein optisches Signal. Beispielsweise kann bei erfolgreicher Betätigung des Ein-Aus-Tasters 2a eine Kombination aus einem haptisch und akustisch erfassbaren Bestätigungs-Signals vorgesehen sein, beispielsweise ein deutlicher Druckpunkt, verbunden mit einem Knacken.

Eine derartige sofortige rückkoppelnde Bestätigung bei Betätigung des Betätigungselements 2 ist insbesondere deshalb von Vorteil, weil bei heutigen Leuchtmitteln oder Beleuchtungssystemen vorgesehen sein kann, dass es eine gewisse Zeitspanne, beispielsweise etwa bis zu 2 Sekunden dauert, bis das gewünschte Licht tatsächlich erscheint.

Beim Ausführungsbeispiel ist das erste Betätigungselement 2 mit einer Hinterleuchtungseinheit beleuchtbar gestaltet, wobei die Hinterleuchtung vorzugsweise dimmbar gestaltet ist. Hierzu sind auf einer in Fig. 3 erkennbaren Platine 8 des Bediengeräts 1 mehrere Leuchtdioden 9 angeordnet. Die Hinterleuchtung ist im Wesentlichen gleichmäßig über den gesamten Bereich des Betätigungselements 2 vorgesehen, so dass das Betätigungselement 2 bei aktivierter Hinterleuchtung wie eine "Sonne" leuchtet.

Eine Einstellbarkeit der Intensität der Hinterleuchtung ist vorteilhaft, weil bei heller Umgebung, beispielsweise tagsüber in einem Meetingraum oder dergleichen, eine vergleichsweise große Helligkeit erwünscht ist, um die Hinterleuchtung erkennbar zu machen; bei dunklerer Umgebung hingegen, beispielsweise nachts in einem Hotelzimmer, ist eine deutlich geringere Intensität erwünscht, um keine Störung durch zu große Helligkeit hervorzurufen.

Wie in den Figuren 1 bis 3 skizziert, ist beim Bediengerät 1 gemäß dem ersten Ausführungsbeispiel weiterhin eine zweite Anzeigeeinheit 5 vorgesehen, die mit Bezug auf das erste Betätigungselement 2 gegenüber der ersten Anzeigeeinheit 4 angeordnet ist. Dies trägt zu einem harmonischen Erscheinungsbild der Frontseite des Bediengeräts 1 bei. Bei vertikaler Orientierung des Bediengeräts 1 ist die zweite Anzeigeeinheit also oberhalb des Drehreglers 2b bzw. des ersten Betätigungselements 2 angeordnet. Die zweite Anzeigeeinheit 5 ist dazu ausgelegt, das jeweils durch eine Betätigung eines der Wahltaster 6 aktuell gesendete Steuersignal anzuzeigen, also beispielsweise eine aktuell eingestellte Beleuchtungsart bzw. Lichtstimmung. Hierfür kann beispielsweise die Darstellung eines entsprechenden Wortes dienen, beispielsweise "Work", wie in Fig. 1 exemplarisch gezeigt.

Das Bediengerät 1 ist gemäß dem ersten Ausführungsbeispiel dazu ausgelegt, eine Einstellung eines Betriebsparameters mit Hilfe des Drehreglers 2b zu ermöglichen. Beispielsweise kann vorgesehen sein, dass eine aktuell eingestellte Beleuchtung gedimmt werden kann. In Fig. 5 ist hierzu skizzenhaft und exemplarisch eine Bedien-Abfolge dargestellt. Nach Einschalten einer Beleuchtungsart "Work" durch Betätigung des Ein-Aus-Tasters 2a und nachfolgender Auswahl einer weiteren Beleuchtungsart "Conference" wird der Drehregler 2b betätigt. Sobald diese Betätigung erfolgt, verändert sich die Darstellung der zweiten Anzeigeeinheit 5. Anstelle der Darstellung der eingestellten Beleuchtungsart "Conference" erscheint nunmehr automatisch eine Anzeige eines möglichen Einstellbereichs der Lichtintensität sowie der aktuell eingestellte Wert der Intensität. Beispielsweise kann dies in Form einer Balkendarstellung vorgesehen sein. Bei Drehung des Drehreglers 2b verändert sich der aktuelle Wert der Intensität und dementsprechend die Anzeige des aktuell eingestellten Werts. Erfolgt in diesem Fall für eine bestimmte Zeitspanne, beispielsweise drei Sekunden keine weitere Betätigung, springt die Anzeige der zweiten Anzeigeeinheit 5 wieder zurück in die Darstellung der Anzeige unmittelbar vor Betätigung des Drehreglers 2b, also beispielsweise in die Darstellung der aktuell ausgewählten Lichtstimmung.

Auch kann beispielsweise vorgesehen sein, dass mit der zweiten Anzeigeeinheit 5 ein Raumtemperaturwert als Klartextanzeige dargestellt werden kann, um eine entsprechende Bedienung bei Veränderung der Raumtemperatur komfortabler zu gestalten.

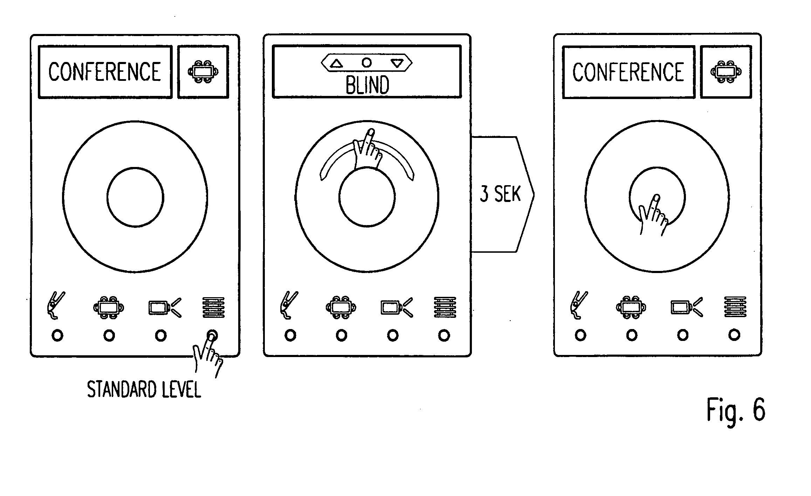

Wie in Fig. 6 skizzenhaft dargestellt, kann weiterhin vorgesehen sein, dass mit dem Drehregler 2b eine Jalousie (oder eine Gruppe von Jalousien) herunter- oder heraufgefahren werden kann. Dabei kann folgende Funktion vorgesehen sein: Der vierte Wahltaster 6"" dient dazu, eine Jalousie zu bewegen, falls diese sich in einer Endposition befindet, also ganz herunter oder ganz herauf gefahren ist. Falls sich die Jalousie in einer mittleren Stellung befindet, kann durch Betätigung des vierten Wahltasters 6"" und eine innerhalb von drei Sekunden darauf folgende Betätigung des Drehreglers 2b die Jalousie bewegt werden. Dabei ändert sich bei Betätigung des Drehreglers 2b die Darstellung der zweiten Anzeigeeinheit 5 in eine Darstellung, die die Funktion des Drehreglers 2b zur Jalousie-Bewegung symbolisiert. Erfolgt in diesem Modus für ca. drei Sekunden keine Betätigung, springt die Anzeige der zweiten Anzeigeeinheit 5 wieder zurück in die Darstellung der Anzeige unmittelbar vor Betätigung des Drehreglers 2b, also beispielsweise wieder in die Darstellung der aktuell ausgewählten Lichtstimmung.

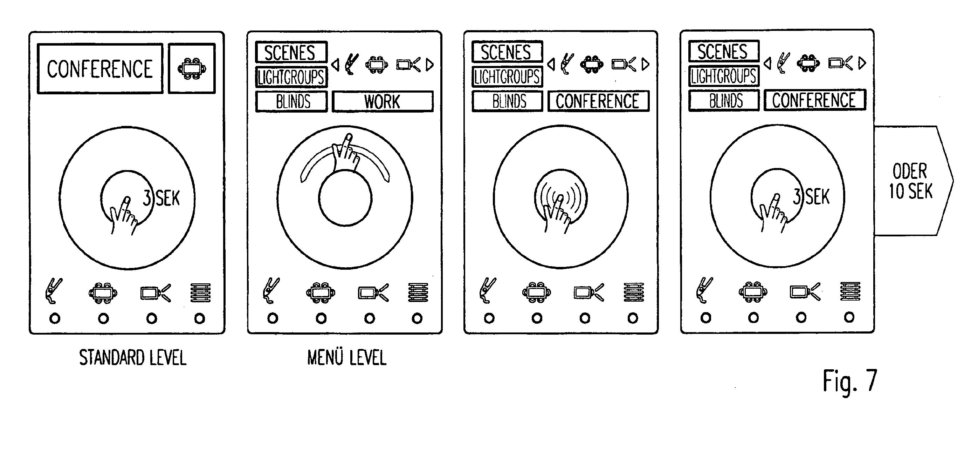

Wie in Fig. 7 skizzenhaft verdeutlicht, kann das Bediengerät 1 gemäß dem ersten Ausführungsbeispiel dazu ausgelegt sein, über eine Menüführung einen Aktor oder eine Gruppe von Aktoren individuell einstellen zu können, also Einstellungen vorzunehmen, die insbesondere über jene hinausgehen, die bereits über die vier Wahltaster 6 aufgerufen werden können. Dabei kann vorgesehen sein, dass mit dem Ein-Aus-Taster 2a ein entsprechendes Menü aufgerufen werden kann, und zwar durch "langes" Drücken, also beispielsweise länger als drei oder fünf Sekunden andauerndes Drücken. Auf diese Weise wird die Möglichkeit gegeben, auf einen separates Betätigungselement zum Aufrufen des Menüs zu verzichten. Dies trägt wiederum dazu bei, das Erscheinungsbild des Bediengeräts besonders homogen gestalten zu können.

Die zweite Anzeigeeinheit 5 kann zur Menüführung verwendet werden. Die erste Anzeigeeinheit 4 kann in diesem Fall dafür vorgesehen sein, auch bei Benutzung des Menüs die Kennzeichnung der Wahltaster 6 beizubehalten. Dabei kann vorgesehen sein, dass im Menü-Modus durch Betätigung eines der Wahltaster 6 das Menü beendet wird und die entsprechende Lichtstimmung bzw. anderweitige Funktion aktiviert wird. Bei aktivem Menü kann der Ein-Aus-Taster 2a als "Enter-Taste", also zur Eingabe-Bestätigungsfunktion, vorgesehen sein und der Drehregler 2b zur Navigation bzw. zur Bewegung innerhalb einer Menü-Ebene. Weiterhin kann vorgesehen sein, dass das Menü beendet wird, wenn innerhalb einer bestimmten Zeitspanne, beispielsweise innerhalb von zehn Sekunden im Menü-Modus keine Betätigung erfolgt. Weiterhin kann vorgesehen sein, dass in diesem Fall alle bis dahin vorgenommenen Änderungen als temporäre Einstellungen beibehalten werden.

Zur Konfiguration und Parametrierung des Bediengeräts kann ein externes Hilfsmittel vorgesehen sein. Dabei kann es sich beispielsweise um ein speziell hierfür vorgesehenes Parametriergerät handeln, das beispielsweise über eine USB-Steckverbindung mit dem Bediengerät verbunden werden kann. Es kann aber auch ein Personal Computer mit einer entsprechenden Software vorgesehen sein. Vorteilhaft ist in jedem Fall ein Handheld-Gerät, da dies aufgrund der räumlichen Verhältnisse, die im Einbaubereich derartiger Bediengeräte üblicherweise gegeben sind, zweckmäßiger und einfacher einzusetzen bzw. zu bedienen ist, als größere Geräte, wie beispielsweise ein typischer Personal Computer.

Eine entsprechende Steckverbindung kann beispielsweise in einem rückseitigen Bereich des Bediengeräts vorgesehen sein, so dass beispielsweise die entsprechende Buchse bei Betrachtung der Frontseite des Bediengeräts nicht zu sehen ist.

Das Bediengerät kann jedoch auch dazu ausgelegt sein, dass eine Konfiguration ohne externes Hilfsmittel durchgeführt werden kann. Vorteilhaft ist es jedoch, wenn die Möglichkeit besteht, eine Konfiguration mit einem externen Hilfsmittel durchzuführen, weil beispielsweise hierdurch die Möglichkeit geschaffen werden kann, auf einfache Weise eine Konfiguration von einem Bediengerät auf ein anderes Bediengerät zu kopieren.

Es kann vorgesehen sein, dass über ein Parametriertool die Tiefe einer Menüstruktur und/oder Anzeigemöglichkeiten der Anzeigeeinheit(en) eingestellt werden können.

Das Bediengerät gemäß dem ersten Ausführungsbeispiel ist derart gestaltet, dass es in ein Standard-Wandeinbauelement integriert werden kann. Beispielsweise kommen hierfür Eurodosen mit 60 mm Durchmesser, Euro-Doppeldosen mit ovaler Form, Einbaudosen des Vereinigten Königreichs und von Italien in Frage.

In Fig. 8 ist ein zweites Ausführungsbeispiel 1' eines erfindungsgemäßen Bediengeräts dargestellt. Ein Unterschied zum ersten Ausführungsbeispiel besteht darin, dass lediglich eine Anzeigeeinheit 4 vorgesehen ist. Dies ermöglicht eine kostengünstigere Herstellung. Ansonsten ist das Bediengerät 1' entsprechend dem ersten Ausführungsbeispiel ausgebildet.

### Bezugszeichenliste

- 1: Bediengerät gemäß einem ersten Ausführungsbeispiel
- 1': Bediengerät gemäß einem zweiten Ausführungsbeispiel
- 2: Betätigungselement
- 2a: Ein-Aus-Taster
- 2b: Drehregler
- 3': erstes Symbol
- 3": zweites Symbol
- 3'": drittes Symbol
- 3"": viertes Symbol
- 4: erste Anzeigeeinheit
- 5: zweite Anzeigeeinheit
- 6: Wahltaster
- 6': erster Wahltaster
- 6": zweiter Wahltaster
- 6"': dritter Wahltaster
- 6"": vierter Wahltaster
- 7: Abdeckung
- 8: Platine
- 9: Leuchtdioden
- 10: elektronische Einheit
- 11: Montagerahmen

## Patentansprüche

1. Bediengerät zum Steuern von mehreren elektrisch steuerbaren Aktoren, beispielsweise Leuchten und/oder Jalousien,
aufweisend
- Mittel zum Senden von Steuersignalen zur Steuerung der Aktoren,
- wenigstens ein Betätigungselement (2), wobei das Bediengerät dazu ausgelegt ist, bei einer Betätigung des Betätigungselements (2) ein Steuersignal zu senden,
- wenigstens eine Anzeigeeinheit (4) und Mittel zur Aktivierung und Deaktivierung der Anzeigeeinheit (4), wobei das Bediengerät dazu ausgelegt ist, die Anzeigeeinheit (4) bei der Betätigung des Betätigungselements (2) automatisch zu aktivieren, falls die Betätigung erfolgt, wenn die Anzeigeeinheit (4) deaktiviert ist,
**dadurch gekennzeichnet,**
**dass** das Bediengerät ein Betätigungselement in Form eines Ein-Aus-Tasters (2a) aufweist und ein weiteres Betätigungselement in Form eines Drehreglers (2b), der ringförmig um den Ein-Aus-Taster (2a) angeordnet ist.

2. Bediengerät nach Anspruch 1,
weiterhin aufweisend eine transparente oder halbtransparente, vorzugsweise einstückige Gehäuseabdeckung (7), die die wenigstens eine Anzeigeeinheit (4) überdeckt.

3. Bediengerät nach Anspruch 1 oder 2,
bei dem die wenigstens eine Anzeigeeinheit (4) eine Flüssigkristallanzeige und/oder eine organische Leuchtdiode umfasst.

4. Bediengerät nach einem der vorhergehenden Ansprüche,
bei dem das Betätigungselement (2)
a) ein mechanisches Betätigungselement ist, beispielsweise ein Taster, Schalter oder Drehregler, und/oder
b) einen berührungssensiblen Sensor, vorzugsweise einen kapazitiven berührungssensiblen Sensor umfasst, und/oder
c) Mittel zur Erzeugung eines haptisch erfassbaren und/oder akustischen und/oder optischen Bestätigungs-Signals nach erfolgter Betätigung umfasst.

5. Bediengerät nach einem der vorhergehenden Ansprüche,
mit mehreren, beispielsweise zwischen drei und fünf, vorzugsweise vier Betätigungselementen in Form von Wahltastern (6), wobei das Bediengerät dazu ausgelegt ist, jeweils bei Betätigung eines der Wahltaster (6) ein vorab festgelegtes Steuersignal an einen bestimmten Aktor oder eine bestimmte Gruppe von Aktoren zu senden.

6. Bediengerät nach Anspruch 5,
weiterhin aufweisend eine erste Anzeigeeinheit (4), die den Wahltastern (6) zugeordnet ist und die dazu ausgelegt ist, das den Wahltastern (6) jeweils zugeordnete, vorab festgelegte Steuersignal mit jeweils einem Symbol (3', 3", 3"', 3"") und/oder einem Text darzustellen,
wobei vorzugsweise eine zweite Anzeigeeinheit (5) vorgesehen ist, die dazu ausgelegt ist, das jeweils durch eine Betätigung eines der Wahltaster (6) aktuell gesendete Steuersignal anzuzeigen.

7. Bediengerät nach einem der vorhergehenden Ansprüche,
wobei der Drehregler (2b) eine Rasterung zur Erzeugung eines haptisch erfassbaren Bestätigungs-Signals umfasst.

8. Bediengerät nach Anspruch 7,
bei dem für den Drehregler (2b) kein Endanschlag vorgesehen ist.

9. Bediengerät nach Anspruch 7 oder 8,
bei dem der Drehregler (2b) punktsymmetrisch geformt ist und dabei eine Bedienoberfläche aufweist, die derart unstrukturiert ist, dass eine absolute Stellung des Drehreglers (2b) bei normaler Betrachtung nicht erkannt werden kann.

10. Bediengerät nach einem der Ansprüche 7 bis 9,
mit einer vorzugsweise dimmbar gestalteten Hinterleuchtungseinheit für den Ein-Aus-Taster (2a) und/oder den Drehregler (2b), wobei die Hinterleuchtungseinheit vorzugsweise wenigstens eine Leuchtdiode (9) umfasst.

11. Bediengerät nach Anspruch 6 und einem der Ansprüche 7 bis 10,
bei dem der Drehregler (2b) zur Einstellung von Betriebsparametern ausgelegt ist und bei dem die zweite Anzeigeeinheit (5) weiterhin dazu ausgelegt ist, bei einer Betätigung des Drehreglers (2b) einen möglichen Regelbereich sowie den entsprechend aktuell eingestellten Wert eines einzustellenden Betriebsparameters anzuzeigen.

12. Bediengerät nach einem der vorhergehenden Ansprüche,
bei dem die wenigstens eine Anzeigeeinheit (4, 5) dazu ausgelegt ist, eine Anzeige in Abhängigkeit von einer vorgesehenen Ausrichtung des Bediengeräts darzustellen.

13. Bediengerät nach einem der vorhergehenden Ansprüche,
weiterhin aufweisend eine Steckverbindungsvorrichtung zur Verbindung mit einem Gerät zur Konfiguration und/oder Parametrierung des Bediengeräts.

14. Bediengerät nach Anspruch 7,
das dazu ausgelegt ist, ein Menü durch ein langes, beispielsweise länger als drei Sekunden andauerndes, Drücken des Ein-Aus-Tasters (2a) zu aktivieren, wobei vorzugsweise der Drehregler (2b) zur Menüwahl vorgesehen ist und der Ein-Aus-Taster (2a) zur Eingabe-Bestätigungsfunktion.

15. Bediengerät nach einem der vorhergehenden Ansprüche,
das dazu ausgelegt ist, in einem Stand-By-Modus ein Orientierüngslicht abzugeben, beispielsweise über das erste Betätigungselement (2).

## Claims

1. Operating device for controlling a plurality of electrically controllable actuators, such as lights and / or blinds, comprising
- means for transmitting control signals to control the actuators,
- at least one actuating element (2), wherein the operating device is designed to transmit a control signal upon operation of the actuating element (2)
- at least a display unit (4) and means for activating and deactivating the display unit (4), wherein the operating device is designed to automatically activate the display unit (4) during the operation of the actuating element (2), if the actuation occurs when the display unit (4) is deactivated, **characterised in that**
the operating device comprises an actuating element in the form of an on/off switch (2a) and an additional actuating element in the form of a control dial, (2b), which is round in shape and is equipped with an on/off switch (2a).

2. Operating device according to Claim #1, further comprising a transparent or semi-transparent, preferably single-piece housing cover (7), which covers the display unit (4) at least.

3. Operating device according to Claim #1 or #2, wherein at least one display unit (4) comprises a liquid crystal display and/or an organic light-emitting diode.

4. Operating device according to one of the preceding claims, wherein the actuating element (2)
a) is a mechanical actuating element, such as a button, switch or knob, and / or
b) comprises a touch-sensitive sensor, preferably a capacitive touch-sensitive sensor, and / or
c) means for generating a haptically perceptible and / or audible and / or visual confirmation signal emitted upon initiated actuation.

5. Operating device according to one of the preceding claims with several (for example, between three and five and preferably four) actuating elements in the form of selector buttons (6), wherein the operating unit is designed to emit a pre-defined control signal to a particular actuator or a particular group of actuators whenever you press one of the selector buttons (6).

6. Operating device according to Claim #5, further comprising a first display unit (4) that is associated with the selector buttons (6) and able to emit a predetermined control signal respectively associated with these selector buttons (6), each marked with a symbol (3', 3", 3"', 3"") and / or which can display a text message, wherein preferably a second display unit (5) is designed to display the currently transmitted control signal at a push of the selector button (6).

7. Operating device according to one of the preceding claims, wherein the rotary control (2b) involves a screening to generate a palpably detectable confirmation signal.

8. Operating device according to Claim #7, in which the rotary control dial (2b) is not equipped with an end stop.

9. Operating device according to Claims #7 or #8, wherein the rotary control (2b) is point-symmetric in shape and thereby has a user interface that is so unstructured that absolute position of the rotary control (2b) cannot be detected under normal observation.

10. Operating device according to one of Claims #7 through to #9, preferably with a dimmable backlight unit for the on/off button (2) and / or the rotary control (2b), where the backlight unit preferably includes at least one light-emitting diode (9).

11. Operating device according to Claim #6 and any of the Claims from #7 though to #10, wherein the rotary control (2b) is designed to adjust operating parameters, and wherein the second display unit (5) is further adapted to indicate a possible control range and the corresponding current value of a discontinued operation parameter upon actuation of the rotary control (2b).

12. Operating device according to one of the preceding claims, wherein the at least one display unit (4, 5) is designed to represent a display in dependence on a proposed alignment of the operating device.

13. Operating device according to one of the preceding claims, further comprising a plug-in connector device for connection to a device enabling configuration and / or parameterisation of the operating device.

14. Operating device according to Claim #7, which is designed to activate a menu by a longer pressing of the on/off button (2a) (for example, one lasting more than three seconds), where the rotary control (2b) is preferably used for menu selection and the on/off button (2a) to enter confirmation function.

15. Operating device according to one of the preceding claims, which is designed to emit an orientation light in a stand-by mode, for example, over the first actuating element (2).

## Revendications

1. Unité de commande pour plusieurs actionneurs pouvant être commandés électriquement, tels que des lumières et / ou stores,
comprenant
- Des moyens pour envoyer des signaux de commande pour commander les actionneurs,
- Au moins un élément d'actionnement (2), dans lequel le dispositif de commande est adapté de manière à envoyer un signal de commande lors de l'actionnement de l'élément d'actionnement (2),
- au moins une unité d'affichage (4) et un moyen pour activer et désactiver l'unité d'affichage (4), l'unité de commande est adaptée pour commander à l'unité d'affichage (4) de s'activer automatiquement si l'actionnement de l'élément d'actionnement (2) se produit lorsque l'unité d'affichage (4) est désactivée,
**caractérisée par**,
ce que le dispositif d'actionnement comprend un élément d'actionnement sous la forme d'un interrupteur marche-arrêt (2a) et un élément d'actionnement supplémentaire sous la forme d'un réglage rotatif circulaire (2b) autour de l'interrupteur marche-arrêt (2a).

2. Commande de la revendication 1,
comprenant en outre un boîtier transparent ou semi-transparent de préférence d'une seule pièce (7) qui recouvre au moins une unité d'affichage (4).

3. Commande de la revendication 1 ou 2,
comprenant au moins une unité d'affichage (4) avec un affichage à cristaux liquides et / ou une diode émettrice de lumière organique.

4. Commande d'une des revendications précédents
dans laquelle l'élément d'actionnement (2)
a) comprend un actionneur mécanique, par exemple un bouton, un commutateur ou un réglage rotatif et / ou
b) comprend un capteur tactile, de préférence un capteur tactile capacitif, et / ou
c) des moyens pour générer un signal de confirmation tactilement et / ou additivement et / ou visuellement perceptible.

5. Commande d'une des revendications précédents
comprenant plusieurs, par exemple, entre trois et cinq, de préférence quatre actionneurs sous la forme d'interrupteurs de sélection (6), auxquels l'unité de commande est adaptée pour envoyer un signal de commande pré-défini à un acteur ou un groupe d'acteurs particulier chaque fois que vous appuyez sur l'un des interrupteurs de sélection (6).

6. Commande de la revendication 5,
comprenant en outre une première unité d'affichage (4) qui est associée avec les boutons de sélection (6) et qui est adaptée pour que les signaux de commande prédéterminés associés à chacun des boutons de sélection (6) soient associés avec un symbole (3 ', 3' ', 3''', 3'"') et / ou un texte à afficher,
et de préférence une deuxième unité d'affichage (5) qui est adaptée pour afficher dans chaque cas par l'actionnement d'un bouton de sélection (6) le signal de contrôle actuellement transmis.

7. Commande d'une des revendications précédents
dont le réglage rotatif (2b) génère une projection d'un signal de confirmation tactilement détectable.

8. Commande de la revendication 7
ne comprenant aucun arrêt pour le réglage rotatif (2b).

9. Commande de la revendication 7 ou 8,
dont le réglage rotatif (2b) est de symétrie centrale et a donc une surface de service non structurées de manière à ce qu'une position absolue du réglage rotatif (2b) ne puisse pas être détectée dans l'affichage normal.

10. Commande d'une des revendications 7 à 9,
de préférence avec une unité de rétro-éclairage à intensité réglable conçue pour le bouton marche-arrêt (2) et / ou le réglage rotatif (2b), l'unité de rétroéclairage comprend de préférence au moins une diode électroluminescente (9).

11. Commande de la revendication 6 et d'une des revendications 7 à 10,
le réglage rotatif (2b), conçu pour ajuster les paramètres de fonctionnement et la seconde unité d'affichage (5) est en outre adaptée pour indiquer lors de l'actionnement du réglage rotatif (2b) une plage de réglages possibles et la valeur de courant du paramètre d'activité à régler.

12. Commande d'une des revendications précédents
comprenant au moins une unité d'affichage (4, 5) conçue pour représenter un affichage en fonction d'un alignement proposé du panneau de contrôle.

13. Commande d'une des revendications précédents
comprenant en outre un dispositif de raccordement pour le raccordement à un dispositif de configuration et / ou le paramétrage du panneau de contrôle.

14. Commande de la revendication 7,
conçue pour activer un menu en appuyant de manière prolongée, plus de trois secondes par exemple, sur le bouton marche-arrêt (2a), et de préférence le réglage rotatif (2b) pour la sélection du menu et le bouton marche arrêt (2a) pour accéder à la fonction de confirmation.

15. Commande d'une des revendications précédents
conçue pour émettre une lumière d'orientation en mode veille, par exemple sur le premier actionneur (2).
